# EUROPÄISCHE PATENTANMELDUNG

(11) **EP 4 456 205 A1**
(43) Veröffentlichungstag der Anmeldung: **30.10.2024**
(21) Anmeldenummer: 23170249.9
(22) Anmeldetag: 27.04.2023
(51) Int. Cl.: H01M 4/88, H01M 4/86, H01M 4/90, H01M 4/92, H01M 8/1004, H01M 8/1039, H01M 8/1069, H01M 8/10

(54) **BESCHICHTEN VON KATIONENAUSTAUSCHMEMBRANEN**

(71) Anmelder: Evonik Operations GmbH, 45128 Essen (DE)
(72) Erfinder: Wild, Andreas, 45721 Haltern am See (DE); Watzele, Sebastian, 45657 Recklinghausen (DE); Merkulov, Sonja, 45770 Marl (DE)
(74) Vertreter: Evonik Patent Association

(57) **Zusammenfassung**

Die Erfindung befasst sich mit dem Beschichten von Kationenaustauschmembranen mit katalytisch aktiven Substanzen. Die katalytisch aktiv beschichteten Kationenaustauschmembranen werden in elektrochemischen Zellen eingesetzt, insbesondere in Brennstoffzellen (engl.: Proton Exchange Membrane Fuel Cells - PEMFC) oder in Elektrolyseuren zur Wasserelektrolyse (engl.: Polymer Electrolyte Membrane Water Electrolysis - PEMWE). Um den Nachteilen von herkömmlichen Decal-Prozesses entgegenzuwirken, wurde nach einem alternativen Prozess zur Beschichtung von Kationenaustauschmembranen gesucht, der einen Transfer von Elektrokatalysator ermöglicht, ohne hohe Temperaturen, hohe Drücke und PFAS-basierte Substrate zu benötigen. Es wurde überraschend gefunden, dass sich Katalysatorschichten, die kurz vor dem Übertragungsschritt mit einem das Kationen leitende Polymer quellenden Lösungsmittel behandelt wurden, deutlich einfacher übertragen lassen.

## Beschreibung

Die Erfindung befasst sich mit dem Beschichten von Kationenaustauschmembranen mit katalytisch aktiven Substanzen. Die katalytisch aktiv beschichteten Kationenaustauschmembranen werden in elektrochemischen Zellen eingesetzt, insbesondere in Brennstoffzellen (engl.: Proton Exchange Membrane Fuel Cells - PEMFC) oder in Elektrolyseuren zur Wasserelektrolyse (engl.: Polymer Electrolyte Membrane Water Electrolysis - PEMWE). Bei der PEMFC und bei der PEMWE werden über die Membran einfach positiv geladene Wasserstoffatome H⁺ ausgetauscht, die auch Protonen genannt werden. Eine Kationenaustauschmembran im Sinne der Erfindung ist somit auch eine Protonenaustauschmembran.

Zur Effizienzsteigerung wird in der Wasserelektrolyse sowie in Brennstoffzellen eine dünne Schicht Katalysator an der Elektroden- bzw. Membranoberfläche benötigt. Der Katalysator beschleunigt die elektrochemische Reaktion in der Zelle und wird daher auch Elektrokatalysator genannt. Die Herstellung einer Katalysator-beschichteten Membran, welche das Herzstück eines Elektrolyseurs bzw. einer Brennstoffzelle darstellt, bestimmt maßgeblich die Kosten und damit die Wirtschaftlichkeit beider Technologien.

Die Beschichtung von Kationenaustauschmembranen mit Elektrokatalysator erfolgt heute standardmäßig nach dem so genannten "Decal-Prozess". Dabei wird der partikuläre Elektrokatalysator zunächst mit einem thermoplastischen Haftvermittler zu einer Beschichtungsmasse vermengt und diese auf ein Transfersubstrat - meist eine Folie aus PTFE (Polytetrafluorethylen) - aufgetragen. Sodann wird das beschichtete Transfersubstrat mit der Kationenaustauschmembran verpresst und erhitzt. Der Thermoplast schmilzt dabei an und verklebt die Katalysatorpartikel mit der Membran. Das Transfersubstrat wird anschließend wie ein Abziehbild (engl.: decal) von der Membran abgezogen und verworfen. Auf der Membran verbleibt eine Beschichtung, die aus dem Haftvermittler und den darin immobilisierten Katalysatorpartikeln besteht.

Der Decal-Prozess ermöglicht die Herstellung einer katalysatorbeschichten Membrane (engl.: Catalyst coated membrane - CCM) via Rolle-zu-Rolle Verfahren, was für eine industrielle Massenproduktion unentbehrlich ist. Dabei werden die Katalysatorschichten am laufenden Band über einen Druckprozess auf die namensgebende Decal-Folie beschichtet, getrocknet und anschließend durch Heißpressen auf die Polymermembran übertragen. Die Membranen bestehen aus Kationen leitenden Polymeren. Dabei handelt es sich meist um sulfonierte, perflourierte Polymere wie etwa Nation^{®} von The Chemours Company, Wilmington, Delaware (US).

Eine umfangreiche Beschreibung des Decal-Prozesses findet sich in der Dissertation von:
Fröhlich, Konstantin: Der Decal-Prozess zur Herstellung katalysatorbeschichteter Membrane für PEM-Brennstoffzellen. KIT Scientific Publishing, 2015.
DOI: 10.5445/KSP/1000045306

Der Decal-Prozess erfordert jedoch harsche Bedingungen: Übliche Prozessparameter sind Übertragungstemperaturen von etwa 150 °C, Drücken von einigen Megapascal und Verpressdauern von einigen Minuten.

Weiterhin werden nahezu ausschließlich per- und polyfluorierte Alkylverbindungen (PFAS) wie insbesondere Polytetrafluorethylen (PTFE) als Transfersubstrat verwendet. Diese sind aufgrund ihrer niedrigen Oberflächenenergie und daraus resultierenden guten Übertragbarkeit der Elektrodenschicht bei gleichzeitig guter Temperaturbeständigkeit notwendig.

Die Nutzung dieser Prozessparameter ermöglicht einen kontinuierlichen Prozess; jedoch lassen die relativ hohen Temperaturen (notwendig, um die Glasübergangstemperatur der Polymermembran zu erreichen), Drücke und Verweilzeiten diesen Prozess ineffizient werden. Darüber hinaus sind die PFAS-basierten Substrate teuer und praktisch nicht mehr wiederverwendbar. Die Nutzung perfluorierter Polymere als "Einweg-Artikel" wird zunehmend kritisch gesehen, was die möglichen ökologischen Einflüsse betrifft.

Um den Nachteilen des klassischen Decal-Prozesses entgegenzuwirken, wurde nach einem alternativen Prozess zur Beschichtung von Kationenaustauschmembranen gesucht, der einen Transfer von Elektrokatalysator ermöglicht, ohne hohe Temperaturen, hohe Drücke und PFASbasierte Substrate zu benötigen.

In der zum Zeitpunkt der Anmeldung noch unveröffentlichten Anmeldung EP23164605 ist ein Verfahren zur Beschichten von Anionenaustauschmembranen beschrieben. In diesem Verfahren werden positiv geladene lonomere verarbeitete, welche naturgemäß Kationen abstoßen und sich daher zur Herstellung von Kationen leitenden Membranen nicht eignen.

Es wurde überraschend gefunden, dass sich Katalysatorschichten, die kurz vor dem Übertragungsschritt mit einem das Kationen leitende Polymer quellenden Lösungsmittel behandelt wurden, deutlich einfacher übertragen lassen.

Gegenstand der Erfindung ist mithin ein Verfahren zum Beschichten von Kationenaustauschmembranen, umfassend die folgenden, nicht chronologischen Schritte:
a) Bereitstellen einer flachen Kationenaustauschmembran, welche einen Membranwerkstoff enthält oder daraus besteht;
b) Bereitstellen eines ersten flachen Transfersubstrats, welches zumindest einseitig mit einer ersten Zusammensetzung beschichtet ist, wobei die erste Zusammensetzung mindestens ein erstes Polymer und mindestens eine erste katalytisch aktive oder katalytisch aktivierbare Substanz enthält;
c) Bereitstellen eines ersten Quellmittels, welches zumindest teilweise in flüssiger Form vorliegt;
d) Auftragen des ersten Quellmittels auf die erste Zusammensetzung und/oder auf die Kationenaustauschmembran;
g) Quellen des ersten Polymers mit dem ersten Quellmittel;
e) Verpressen der ersten Zusammensetzung mit der Kationenaustauschmembran in Gegenwart des ersten Transfersubstrats, wobei die Temperatur der ersten Zusammensetzung beim Verpressen zwischen -90°C und 100°C beträgt;
f) Abschälen des ersten Transfersubstrats von der ersten Zusammensetzung, sodass eine Kationenaustauschmembran erhalten wird, welche auf einer Seite mit der ersten Zusammensetzung beschichtet ist.

Ein solches Verfahren ist Gegenstand der Erfindung.

Durch die Quellung kann die Katalysatorschicht bereits unterhalb der Glasübergangstemperatur der Polymermembran übertragen werden. Vorzugsweise beträgt die Temperatur der ersten Zusammensetzung und/oder der zweiten Zusammensetzung beim Verpressen zwischen -30°C und 80°C oder zwischen -15°C und 70°C. Besonders liegt die Temperatur der ersten Zusammensetzung bei Zimmertemperatur, also etwa zwischen 10°C und 30°C.

Weiterhin kann der Übertrag bereits bei geringeren Drücken erfolgen. Der Druck beim Verpressen sollte zwischen 0.001 MPa bis 0.15 MPa betragen. Vorzugsweise erfolgt das Verpressen bei einem Druck von 0.01 MPa bis 0.1 MPa.

Diese Verfahren ermöglicht es weiterhin auch Katalysatorschichten zu übertragen, die auf klassische nicht-fluorierte Folien wie z.B. PET-Folien gedruckt wurden, was enorme ökonomische und ökologische Vorteile bringt.

Bei dem Quellmittel handelt es sich um eine Substanz, die zumindest teilweise in flüssiger Form vorliegt und das in der Zusammensetzung enthaltene Polymer quillt, wenn es mit dem Polymer in Kontakt kommt. Unter Quellen ist zu verstehen, dass das Quellmittel in das Polymer eindringt und es aufweitet. Das Volumen des Polymers nimmt daher bei Kontakt mit dem Quellmittel kontinuierlich zu, währenddessen das Quellmittel in das Polymer eindringt. Das Quellen ist folglich ein Prozess, der eine gewisse Zeit erfordert. Zu Quellmitteln zählen auch Substanzen, oder Gemische von Substanzen die das Polymer auflösen. Zu dem Kontakt zwischen Polymer und Quellmittel kommt es bei dem Auftragen des Quellmittels auf die Zusammensetzung bzw. beim Verpressen. Das Quellen kann also gleichzeitig mit dem Auftragen und/oder dem Verpressen erfolgen, kann aber auch früher oder später stattfinden. Auf die Chronologie der Schrittabfolge kommt es nicht an. Insbesondere muss das Quellen nicht separat geschehen, es kann auch zeitgleich mit anderen Verfahrensschritten erfolgen. Das Verfahren kann auch Haltephasen enthalten, in denen dem Quellmittel Zeit gegeben wird, das Polymer zu quellen. Eine chemische Reaktion zwischen Quellmittel und Polymer ist beim Quellen nicht notwendig, aber auch nicht ausgeschlossen. Insbesondere ist es möglich, dass das Quellmittel das Polymer teilweise oder komplett löst. Wichtig ist, dass das Quellmittel zumindest teilweise in flüssiger Form vorliegt, wenn es mit dem Polymer in Kontakt kommt. So wird das Quellen begünstigt. Das Quellmittel kann auch teilweise in der Gasphase vorliegen, hat dann aber weniger effektiven Kontakt mit dem Polymer, weswegen dieses langsamer quillt. Im Interesse einer hohen Prozesseffektivität ist daher die Verwendung eines flüssigen Quellmittels.

Abgesehen von dem Quellschritt und der Verarbeitungstemperatur gleicht der Ablauf des erfindungsgemäßen Verfahrens einem Decal-Prozess. Durch die Verwendung des teilweise flüssigen Quellmittels ist der erfindungsgemäße Prozess allerdings als nass aufzufassen. Dennoch kann auf einen langwierigen und energieintensiven Trocknungsschritt verzichtet werden, weil das Quellmittel lediglich in geringen Mengen eingesetzt wird und sich unter Umgebungsbedingungen mit der Zeit verflüchtigt. Dies gilt insbesondere für Quellmittel mit niedrigem Siedepunkt, wie etwa Ethanol.

Grundsätzlich werden in dem erfindungsgemäßen Prozess Kationenaustauschmembranen in flacher Gestalt verarbeitet. Flach bedeutet hier, dass die Höhe (bzw. Stärke) der Kationenaustauschmembran viel geringer ist als die Länge und die Breite. Die Kationenaustauschmembranen weist somit eine im Wesentlichen zweidimensionale Gestalt auf. Etwaige Prägungen in der Oberfläche der Membran ändern nichts an ihrer flachen Gestalt. Es handelt sich mithin um eine Flachmembran. Das Transfersubstrat ist in analoger Weise ebenfalls flach.

In dem erfindungsgemäßen Verfahren wird die Kationenaustauschmembran zumindest auf einer Seite mit einer ersten Zusammensetzung beschichtet. Da Kationenaustauschmembranen meist in elektrochemischen Zellen eingesetzt werden, die zwei von der Membran getrennte Kompartimente umfasst, welche jeweils mit einem Elektrokatalysator gefüllt sind, macht es Sinn, die Kationenaustauschmembran beidseitig zu beschichten. Genauer gesagt, wird die Kationenaustauschmembran auf der einen Seite mit der ersten Zusammensetzung beschichtet und auf der anderen Seite mit einer zweiten Zusammensetzung. Die erste Zusammensetzung enthält dann beispielsweise den Katalysator für die Kathodenreaktion und die zweite Zusammensetzung den Katalysator für die Anodenreaktion. Im erfindungsgemäßen Verfahren ist das möglich, und zwar sowohl simultan als auch seriell.

Gemäß einer bevorzugten Weiterbildung der Erfindung umfasst das Verfahren zusätzlich noch die folgenden, nicht chronologischen Schritte:
h) Bereitstellen eines zweiten flachen Transfersubstrats, welches zumindest einseitig mit einer zweiten Zusammensetzung beschichtet ist, wobei die zweite Zusammensetzung mindestens ein zweites Polymer und mindestens eine zweite katalytisch aktive oder katalytisch aktivierbare Substanz enthält;
i) Bereitstellen eines zweiten Quellmittels, welches zumindest teilweise in flüssiger Form vorliegt;
j) Auftragen des zweiten Quellmittels auf die zweite Zusammensetzung und/oder auf die Kationenaustauschmembran;
k) Quellen des zweiten Polymers mit dem zweiten Quellmittel;
l) Verpressen der zweiten Zusammensetzung mit der Kationenaustauschmembran in Gegenwart des zweiten Transfersubstrats, wobei die Temperatur der zweiten Zusammensetzung beim Verpressen zwischen -90°C und 100°C beträgt;
m) Abschälen des zweiten Transfersubstrats von der zweiten Zusammensetzung, sodass eine Kationenaustauschmembran erhalten wird, welche auf einer Seite mit der ersten Zusammensetzung beschichtet ist und welche auf der anderen Seite mit der zweiten Zusammensetzung beschichtet ist.

Ein solches Verfahren zielt mithin auf die beidseitige Beschichtung der Kationenaustauschmembran ab: Auf der einen Seite erfolgt die Beschichtung mit der ersten Zusammensetzung, auf der anderen Seite wird die zweite Zusammensetzung aufgetragen. Die erste und zweite Zusammensetzung weisen vorzugsweise eine unterschiedliche Rezeptur auf; die Rezepturen können sich insbesondere durch den enthaltenen Katalysator unterscheiden. Die beiden Zusammensetzungen können aber auch im Wesentlichen identisch sein.

Vorzugsweise erfolgt das Verpressen der ersten Zusammensetzung mit der Kationenaustauschmembran in Gegenwart des zweiten Transfersubstrats und das Verpressen der zweiten Zusammensetzung mit der Kationenaustauschmembran in Gegenwart des ersten Transfersubstrats. Mithin werden beide Zusammensetzungen simultan mit der Membran verpresst. Das steigert die Effizienz des Prozesses.

Der Druck beim Verpressen sollte zwischen 0.001 MPa bis 0.15 MPa betragen. Vorzugsweise erfolgt das Verpressen bei einem Druck von 0.01 MPa bis 0.1 MPa. Die angegebenen Druckbereiche gelten sowohl für das Verpressen der ersten Zusammensetzung mit der Kationenaustauschmembran als auch für das Verpressen der zweiten Zusammensetzung mit der Kationenaustauschmembran. Wenn beide Zusammensetzungen gleichzeitig in Gegenwart ihrer jeweiligen Transfersubstrate verpresst werden, wirkt notwendigerweise derselbe Druck auf das gesamte Laminat. In diesem Zusammenhang soll nicht unerwähnt bleiben, dass herkömmliche Decal-Verfahren mit Drücken von 0.3 MPa bis 10 MPa arbeiten. Im erfindungsgemäßen Verfahren herrschen mithin deutlich geringere Drücke.

Es gibt unterschiedliche Optionen, wie das erste Quellmittel aufgebracht werden kann. Es kann wahlweise ausschließlich auf die erste Zusammensetzung werden oder ausschließlich auf die Kationenaustauschmembran oder auf beides. Sofern ein zweites Quellmittel verwendet wird, ergeben sich dafür die analogen Optionen. Die Wahl des Auftragsorts hängt von dem Quellverhalten des Quellmittels in dem zugehörigen Polymer ab.

Ein besonderer Vorteil des erfindungsgemäßen Verfahrens ist im Übrigen, dass sich das Transfersubstrat von dem gequollenen Polymer besonders leicht abschälen lässt. Daher gestattet es das erfindungsgemäße Verfahren ein Transfersubstrat aus einem fluorfreien Polymer zu verwenden. Bekannte decal-Prozesse benutzen nämlich als Transfersubstrat in der Regel Fluorpolymer-Folien, etwa aus PTFE, um die Haftung zu verringern und dadurch das Abziehen zu erleichtern. Da das Transfersubstrat in der Regel verworfen wird, ist die Verwendung von Fluorpolymeren aus Umweltschutzgründen bedenklich. Im erfindungsgemäßen Verfahren lässt sich dahingegen ein Transfersubstrat aus einem unbedenklichen, preiswerten, fluorfreien Polymer wie etwa Polyethylen (PE) oder Polypropylen (PP) oder Polyethylenterephthalat (PET) verwenden. Eine besondere Ausführungsform der Erfindung ist daher dadurch gekennzeichnet, dass mindestens ein Transfersubstrat überwiegend aus einem fluorfreien Polymer besteht.

Sofern beidseitig beschichtet wird, bietet es sich an, dasselbe Quellmittel für beide Seiten zu verwenden. Mithin entspricht das erste Quellmittel dem zweiten Quellmittel. "Entsprechend" bedeutet im einfachsten Fall, dass es sich bei dem ersten Quellmittel und dem zweiten Quellmittel um dieselbe chemische Substanz handelt. Allerdings werden die Quellmittel in der betrieblichen Praxis nicht als Reinstoffe eingesetzt, sondern in technischer Qualität. Dies bedeutet, dass das Quellmittel zusammen mit Verunreinigungen oder technisch bedingten Begleitstoffen eingesetzt wird, zum Beispiel 98 % Ethanol und 2 % Wasser, weil sich Wasser nicht vertretbaren Aufwand komplett aus dem Ethanol entfernen lässt. Wenn das erste Quellmittel in einer anderen technischen Qualität eingesetzt wird als das zweite Quellmittel, jedoch in beiden Fällen dieselbe Substanz enthalten ist, entspricht das erste Quellmittel dem zweiten Quellmittel im Sinne der hier verwendeten Terminologie. So können sich zwei Chargen Quellmittel mit unterschiedlichem Wassergehalt im Ethanol sich im Sinne der Erfindung entsprechen, obwohl beide Chargen nicht exakt identisch sind. Entscheidend ist, dass dieselbe Substanz, beispielweise Ethanol eingesetzt wird. Auf den unterschiedlichen Wassergehalt kommt es in dem Beispiel nicht an.

Analog bietet es sich an, dass das erste Polymer dem zweiten Polymer entspricht. Auf technisch bedingte Verunreinigungen im Polymer kommt es dabei nicht an. Polymere können auch dann einander entsprechen, wenn sie dieselbe Wiederholeinheit enthalten, aber unterschiedliche Kettenlängen aufweisen. Bevorzugt weisen das erste Polymer und das zweite Polymer dieselbe Wiederholeinheit auf.

Bei dem Polymer, was mit dem Quellmittel gequollen wird, handelt es sich vorzugsweise um ein Kationen leitendes Polymer, also ein lonomer. Dementsprechend ist das erste Polymer und/oder das zweite Polymer Kationen leitend. Die Verwendung von nicht ionenleitenden Polymeren als Haftvermittler zur Immobilisierung der Katalysatoren auf der Membran ist ebenfalls denkbar; jedoch ist im Interesse der Effizienz der so hergestellten Zelle davon abzuraten.

In dem Verfahren wird vorzugsweise ein sulfoniertes, perflouriertes Polymer als Kationen leitendes Polymer eingesetzt und zwar möglichst universell. Vorzugsweise wird dasselbe Kationen leitendes Polymer in der ersten und/oder zweiten Zusammensetzung als erstes bzw. zweites Polymer zwecks Immobilisierung der katalytisch aktiven Substanz verwendet. Ganz besonders bevorzugt werden Kationen leitende Polymere mit derselben Wiederholeinheit in den Zusammensetzungen und als Membranwerkstoff verwendet. Die Leitfähigkeit der Membran für Anionen wird durch das kationische Polymer entsprechend intrinsisch ermöglicht. Die Kettenlänge der kationischen Polymeren mit derselben Wiederholeinheit kann unterschiedlich sein.

Besonders bevorzugt ist, dasselbe Kationen leitende Polymer, was in der Kationenaustauschmembran enthalten ist, auch zur Immobilisierung der Katalysatoren auf der Membran zu verwenden. Dadurch wird die Anzahl der zu verarbeitenden Substanzen reduziert. Dementsprechend ist diese bevorzugte Variante des Verfahrens dadurch gekennzeichnet, dass die Kationenaustauschmembran ein Kationen leitendes Polymer enthält oder daraus besteht, und dass dieses Kationen leitende Polymer identisch ist mit dem ersten Polymer und/oder mit dem zweiten Polymer.

Die Verwendung des fluorfreien Polymers als Transfersubstrat ist besonders dann vorteilhaft, wenn das Transfersubstrat nicht wiederverwendet wird und mithin nach dem Abschälen verworfen wird. Fluorfreie Transfersubstrate aus PP, PE oder PET sind nämlich vergleichsweise einfach zu entsorgen bzw. zu recyceln und benötigen für ihre Herstellung keine Fluorkohlenwasserstoffe. Darüber hinaus sind PP, PE oder PET -Folien preisgünstiger als die herkömmlichen Transfersubstrate aus PTFE.

In einer besonders bevorzugten Ausführungsform wird das erfindungsgemäße Verfahren als Rolle-zu-Rolle-Prozess ausgeführt. Dies bedeutet, dass das die Ausgangsmaterialien zumindest teilweise bandförmig auf einer Spule bereitgestellt werden und dass auch das Zielprodukt bandförmig auf einer Spule erhalten wird. Die bandförmigen Materialen bewegen sich während des Prozesses kontinuierlich von Rolle zur Rolle durch den Prozess hindurch. Der Prozess ist daher besonders produktiv. Konkret sieht die Rolle-zu-Rolle-Version des erfindungsgemäßen Prozesses es vor, dass im Betrieb mindestens eine umlaufende Spule aufgewickelt oder abgewickelt wird, wobei die Spule ausgewählt ist aus der Gruppe umfassend die folgenden Spulen:
i) eine Spule, auf der die Kationenaustauschmembran bandförmig bereitgestellt wird;
ii) eine Spule, auf der die beschichtete Kationenaustauschmembran bandförmig erhalten wird;
iii) eine Spule, auf der ein Transfersubstrat bandförmig bereitgestellt wird.

Vorzugsweise werden zwei oder drei der oben genannten Spulen aufgewickelt bzw. abgewickelt. Im Rolle-zu-Rolle-Prozess erfolgen die Arbeitsschritte des Verfahrens in Richtung der bandförmigen Materialien entlang der Vorschubrichtung nacheinander; von globaler Perspektive aus gesehen geschehen die Schritte jedoch gleichzeitig, weil es ein kontinuierlicher Prozess ist.

Alternativ lässt sich der Prozess auch batchweise, mit nicht bandförmigen, unbewegten Materialien durchführen.

Vorteilhafterweise wird beim Rolle-zu-Rolle-Prozess das das Verpressen mit Hilfe eines ortsfesten Walzenpaares bewerkstelligt, wobei mindestens eine Walze des Walzenpaares auf einem bereits genannten bandförmigen Transfersubstrat wälzt oder rollt. Dadurch lässt sich die zum Verpressen benötigte Druckkraft kontinuierlich auf das Transfersubstrat aufbringen und so die Fertigungsgüte steigern.

Ein besonderer Vorteil des Prozesses ist, dass er- verglichen mit herkömmlichen decal-Prozessen - bei geringen Temperaturen durchgeführt werden kann. Deswegen kann insbesondere auf eine gesonderte Beheizung der Walzen verzichtet werden. In herkömmlichen decal-Prozessen werden regelmäßig beheizte Walzen eingesetzt, um das lonomer aufzuweichen. Dies ist hier dank des Quellens nicht notwendig. Eine bevorzugte Ausführungsform der Erfindung sieht es daher vor, dass die Walzen des Walzenpaares unbeheizt sind.

Beim Rolle-zu-Rolle-Prozess erfolgt das Abschälen mit Hilfe mindestens einer ortsfesten Schälrolle, wobei die Schälrolle auf einem bereits genannten bandförmigen Transfersubstrat rollt oder wälzt. Das Abschälen wird dadurch verstetigt, sodass die Produktivität und die Qualität steigt.

In dem erfindungsgemäßen Verfahren wird die Kationenaustauschmembran mit mindestens einer Zusammensetzung beschichtet, welche einen Elektrokatalysator enthält. Elektrokatalysatoren sind Substanzen, die in elektrochemischen Reaktionen katalytisch wirken oder so aktivierbar sind, dass sie katalytisch wirken. Nach dem derzeitigen Forschungstand lassen sich die folgenden Elemente in Reinform, als Oxid, als Hydroxid oder als Oxidhydroxid in dem Prozess verarbeiten: Iridium (Ir), Nickel (Ni), Cobalt (Co), Chrom (Cr), Eisen (Fe), Ruthenium (Ru), Kuper (Cu), Molybdän (Mo), Zink (Zn), Blei (Pb), Mangan (Mn), Wolfram (W), Platin (Pt), Schwefel (S), Zinn (Sn), Gold (Au), Silber (Ag), Palladium (Pd), Rhenium (Re), Rhodium (Rh). Diese Elemente kommen in Reinform oder als Oxid oder als Hydroxid oder als Oxidhydroxid jeweils einzeln oder in Kombinationen als Elektrokatalysator in Betracht.

Ganz besonders bevorzugt wird eine Zusammensetzung verarbeitet, die als Elektrokatalysator Platin oder Platinlegierung geträgert auf Kohlenstoff (Pt/C) oder ein Iridium-basierten geträgerten oder ungeträgerten Katalysator enthält. Favorisierte Trägermaterialien für den Iridium-basierten Katalysator sind Antimon- dotiertes Zinnoxid (ATO) sowie Niob- bzw. Tantal dotiertes Titan(oxid).

Das in dem Prozess eingesetzte Quellmittel wird so gewählt, dass es das Polymer bzw. lonomer in der Beschichtungszusammensetzung zumindest quillt. Da die in der Wasserelektrolyse und Wassersynthese eingesetzten lonomere prinzipbedingt eine hohe Widerstandsfähigkeit gegen Wasseraufnahme aufweisen müssen, sind wässrige Quellmittel in der Regel nicht geeignet. Besser geeignet sind organische Quellmittel. Als besonders geeignet haben sich die folgenden Quellmittel erwiesen: Methyl-2-pyrrolidon (NMP), N,N-Dimethylformamid (DMF), N,N-Dimethylacetamid (DMAC), Dimethylsulfoxid (DMSO), Isopropanol (IPA), Methanol (MeOH), Ethanol (EtOH). Diese Quellmittel können einzeln oder gemischt eingesetzt werden. Besonders bevorzugt werden Dimethylsulfoxid (DMSO) und/oder Ethanol (EtOH) eingesetzt. Letztgenannte Quellmittel erfüllen ihren Zweck recht gut und sind darüber hinaus auch vergleichsweise menschenfreundlich, was ihre Handhabung und Verarbeitung vereinfacht. Das Quellmittel kann auch mit Substanzen versetzt sein, die das Polymer nicht oder nicht ausreichend quellen, wie etwa mit Wasser.

Vorzugsweise wird das Quellmittel, seine Einsatzmenge und seine Kontaktzeit so gewählt, dass es das jeweilige Polymer nicht nur quillt, sondern auch anlöst. Unter Lösen ist das Aufheben der intermolekularen Bindungskräfte innerhalb des Polymers zu verstehen. Jedem Lösen des Polymers geht ein Quellen voran. Es ist daher oft eine Frage der Kontaktzeit wann das Quellen in ein Lösen des Polymers übergeht. Anlösen sei hier als ein Lösen des Polymers in einer dünnen Grenzschicht des Kontakts zum Quellmittel definiert. Sofern das Polymer angelöst wird, lässt sich das Transferband besonders leicht abziehen. Eine bevorzugte Weiterbildung des Verfahrens sieht es demnach vor, dass das erste Quellmittel das erste Polymer zumindest teilweise löst und/oder dass das zweite Quellmittel das zweite Polymer zumindest teilweise löst.

Ganz besonders bevorzugt wird eine Kombinationen aus einem Kationen leitenden Polymer und einem organischen Substanz als Quellmittel verwendet, nämlich ein sulfoniertes, perflouriertes Polymer und als Quellmittel Dimethylsulfoxid und/oder Ethanol.

Das Masseverhältnis q/p zwischen Quellmittel und Kationen leitendes Polymer liegt vorzugsweise zwischen 0.01 und 2. Dabei versteht sich q als die Masse des auf das Kationen leitenden Polymer aufgetragenen Quellmittels und *p* als die Masse des Kationen leitenden Polymers. Ein geringer spezifische Quellmitteleinsatz ermöglicht eine Prozessierung ohne gesonderte Trocknung.

Im Sinne des erfindungsgemäßen Verfahrens muss die Kationenaustauschmembran nicht zwangsläufig direkt mit der Zusammensetzung beschichtet werden. Es ist auch denkbar, eine Kationenaustauschmembran zu verwenden, die bereits mit einer Vorbeschichtung versehen ist. Die Zusammensetzung wird dann auf die Vorbeschichtung aufgetragen. Zwischen der eigentlichen Kationenaustauschmembran und der katalytisch aktiven Beschichtung befindet sich dann die Vorbeschichtung. Die Vorbeschichtung kann die Haftung des Elektrokatalysators auf der Membran verbessern. Eine Variante des erfindungsgemäßen Verfahrens sieht es daher vor, dass die Kationenaustauschmembran mit mindestens einer Vorbeschichtung versehen bereitgestellt wird, dergestalt, dass die Zusammensetzung auf die Vorbeschichtung aufgetragen wird.

Die erfindungsgemäß beschichtete Kationenaustauschmembran kann in elektrochemischen Zellen verbaut werden, insbesondere als catalyst coated membrane (CCM). Bei der elektrochemischen Zelle kann es sich um einen PEM-Elektrolyseur oder um eine PEM-Brennstoffzelle handeln. Der Elektrolyseur kann zur Elektrolyse von Wasser eingesetzt werden. Die PEM-Brennstoffzelle dient zur Umsetzung von chemischer Energie in elektrische Energie durch Synthese von Wasserstoff und Sauerstoff zu Wasser.

Ein Ausführungsbeispiel eines erfindungsgemäßen Prozess soll nun anhand einer Zeichnung näher erläutert werden. Es zeigt:

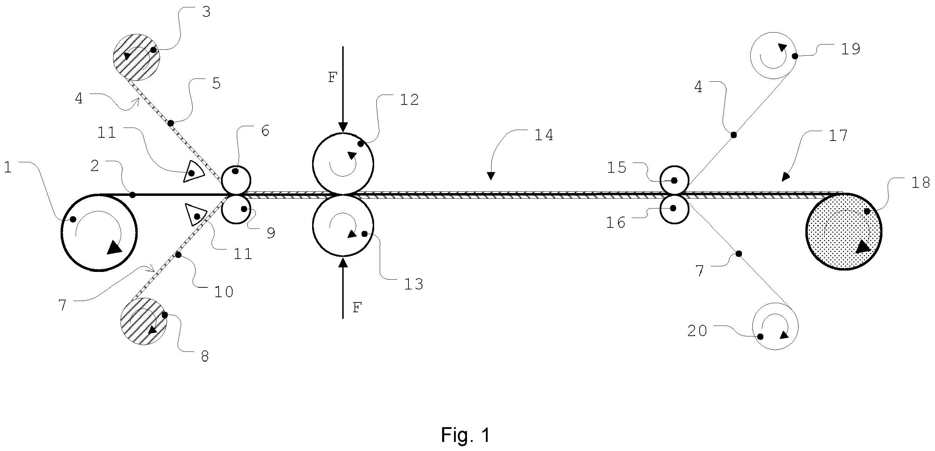

- **Figur 1:**: Schematische Darstellung eines Rolle-zu-Rolle-Prozesses.

Figur 1 zeigt den Ablauf den Ablauf eines erfindungsgemäßen Prozesses in schematischer Darstellung. Bei dem dargestellten Verfahren handelt es sich um einen Rolle-zu-Rolle-Prozess.

Auf einer ersten Spule 1 wird eine flache, bandförmige Kationenaustauschmembran 2 bereit gestellt. Die Kationenaustauschmembran 2 besteht vollständig aus einem Kationen leitenden Polymer (lonomer). Die Kationenaustauschmembran 2 wird von der ersten Spule 1 abgewickelt.

Auf einer zweiten Spule 3 wird ein erstes Transfersubstrat 4 bereitgestellt. Bei dem ersten Transfersubstrat 4 handelt es sich um ein flaches Band aus Polyethylenterephthalat (Folie), welches einseitig mit einer ersten Zusammensetzung 5 beschichtet ist. Die erste Zusammensetzung 5 umfasst dasselbe Kationen leitende Polymer (lonomer), aus dem auch die Kationenaustauschmembran 2 besteht und darin dispergiert eine erster Elektrokatalysator. Bei dem Elektrokatalysator handelt es sich um eine Substanz, welche beispielsweise die Elektrolyse oder Synthese von Wasser katalysiert. Genauer gesagt, katalysiert der in der ersten Zusammensetzung 5 enthaltene Elektrokatalysator die Kathodenreaktion in einem Elektrolyseur oder einer Brennstoffzelle.

Das erste Transfersubstrat 4 wird von der zweiten Spule 3 abgewickelt und mit Hilfe einer ersten Kontaktwalze 6 mit der Kationenaustauschmembran 2 kontaktiert.

Analog wird ein zweites Transfersubstrat 7 von einer dritten Spule 8 abgerollt und mit Hilfe einer zweiten Kontaktwalze 9 mit der Kationenaustauschmembran 2 kontaktiert. Das zweites Transfersubstrat 7 trägt eine zweite Zusammensetzung 10, welche dasselbe lonomer, aber einen anderen Elektrokatalysator enthält. Der andere Elektrokatalysator katalysiert die Anodenreaktion.

Während das erste Transfersubstrat 4 mit der Oberseite der Kationenaustauschmembran 2 kontaktiert wird, wird das zweite Transfersubstrat 7 mit der Unterseite der Kationenaustauschmembran 2 kontaktiert. Die Kontaktierung mit den beiden Walzen 6, 9 erfolgt gleichzeitig an derselben Stelle des Verlaufs der Kationenaustauschmembran.

Unmittelbar bevor die beiden Transfersubstrate 4, 7 mit der Kationenaustauschmembran 2 kontaktiert werden, werden die beiden Zusammensetzungen 5, 10 jeweils mit einem Quellmittel 11 besprüht. Bei dem Quellmittel 11 handelt es sich um eine flüssige organische Substanz, welche das lonomer quillt. Für beide Zusammensetzungen 5, 10 wird dasselbe Quellmittel 11 verwendet. Es ist auch denkbar, für die beiden Zusammensetzungen ein unterschiedliches Quellmittel zu verwenden, ein erstes Quellmittel für die erste Zusammensetzung 5 und ein zweites Quellmittel für die zweite Zusammensetzung 10. Da aber in beiden Zusammensetzungen dasselbe Kationen leitende Polymer enthalten ist, macht es auch Sinn, dasselbe Quellmittel 11 für beide Zusammensetzungen 5, 10 zu verwenden.

Die beiden Zusammensetzungen 5, 10 quellen nach dem Aufsprühen des flüssigen Quellmittels 11 an. Genauer gesagt, das in beiden Zusammensetzungen enthaltene lonomer quillt, da das Quellmittel 11 in das lonomer eindringt.

Mithilfe eines ortsfesten Walzenpaares 12 ,13 wird das erste Transfersubstrat 4 mit der ersten Zusammensetzung 5 und das zweite Transfersubstrat 7 mit der zweiten Zusammensetzung 10 mit der Kationenaustauschmembran 2 verpresst. Die beiden Walzen 12, 13 wälzen dabei auf der Schichtung aus den beiden Transfersubstraten 4, 7 und der dazwischen angeordneten Kationenaustauschmembran 2 ab. Dabei drücken die beiden Walzen 12, 13 mit einer Kraft F aufeinander, welche die beiden gequollenen Zusammensetzungen 5, 10 mit der Kationenaustauschmembran 2 verpresst. Die Kraft F wirkt senkrecht zu der Ebene, in der sich die Kationenaustauschmembran 2 erstreckt. Die Kraft wirkt durch die beiden Transfersubstrate 4, 7 hindurch. Die beiden Transfersubstrate 4, 7 isolieren die beiden Walzen des Walzenpaars 12, 13 von der Zusammensetzung 5, 10, sodass diese nicht verschmutzen.

Das Verpressen der beiden Zusammensetzungen 5, 10 mit der Kationenaustauschmembran 2 erfolgt bei Raumtemperatur. Die Walzen des Walzenpaars 12, 13 sind nicht beheizt.

Durch das Verpressen wird ein bandförmiges Sandwich 14 erhalten mit dem folgenden Schichtaufbau (von oben nach unten):
- Erstes Transfersubstrat 4
- erste Zusammensetzung 5
- Kationenaustauschmembran 2
- zweite Zusammensetzung 10
- zweites Transfersubstrat 7.

Aufgrund desselben lonomers in den beiden Zusammensetzungen 5 und 10 und in der Kationenaustauschmembran 2 ist der Übergang von der ersten Zusammensetzung 5 in die Kationenaustauschmembran 2 und weiter in die zweite Zusammensetzung 10 fließend: Im Prinzip wird der erste Elektrokatalysator auf der Oberseite der Kationenaustauschmembran 2 angereichert, währenddessen der zweite Elektrokatalysator auf der Unterseite der Kationenaustauschmembran 2 angereichert wird. Das lonomer immobilisiert die Katalysatorpartikel auf den beiden Seiten der Membran 2 und stellt gleichzeitig eine Kationen leitende Verbindung zwischen den Katalysatorpartikeln und durch die Membran 2 hindurch her.

Nach dem Verpressen der beiden Zusammensetzungen 5, 10 mit der Kationenaustauschmembran 2 werden die beiden Transfersubstrate 4, 7 nicht mehr benötigt. Sie werden mit Hilfe zweier Schälwalzen 15, 16 von dem Sandwich 14 abgezogen, sodass eine beidseitig mit Elektrokatalysator beschichtete Kationenaustauschmembran 17 zurück bleibt. Dabei handelt es sich um das Zielprodukt des Prozesses. Die beschichtete Kationenaustauschmembran 17 wird auf eine vierte Spule 18 aufgewickelt.

Die beiden abgeschälten Transfersubstrate 4, 7 werden ebenfalls auf eine fünfte bzw. sechse Spule 19, 20 aufgewickelt.

Wenn die erste Spule 1 leer ist, wird der Prozess gestoppt und die beiden Spulen 19, 20 mit dem abgeschälten Transfersubstraten 4, 7 verworfen. Da es sich dabei um PET-Folie handelt, lässt sich diese problemlos entsorgen. Die vierte Spule 18 mit der beschichteten Kationenaustauschmembran 17 ist das Zielprodukt im Gebinde. Optional kann die beschichtete Kationenaustauschmembran 17 beim Aufwickeln auf die vierte Spule 18 noch mit einer Schutzfolie versehen werden (nicht dargestellt). Die Schutzfolie verhindert eine Beschädigung der Beschichtung. Es bietet sich an, eines oder beide der abgeschälten Transfersubstrate 4, 7 als Schutzfolie zu verwenden, so wird Material eingespart und weniger Abfall erzeugt. Soll beispielsweise das zweite abgeschälte Transfersubstrat 7 als Schutzfolie verwendet werden, wird dieses nicht auf die sechse Spule 20 aufgewickelt sondern zusammen mit der beschichteten Kationenaustauschmembran 17 auf die vierte Spule 18 aufgewickelt.

Sodann wird eine frische erste Spule 1 mit unbeschichteter Kationenaustauschmembran 2 bereit gestellt sowie eine frische zweite Spule 3 mit frischem ersten Transfersubstrat 4 und frischer erster Zusammensetzung 5 sowie eine frische dritte Spule 8 mit frischem zweiten Transfersubstrat 7 und frischer zweite Zusammensetzung 10. Der Prozess beginnt vom neuen.

Mit Hilfe des so beschriebenen Rolle-zu-Rolle-Prozess wird eine flache, bandförmige Kationenaustauschmembran 2 rationell beidseitig mit Elektrokatalysator beschichtet, sodass eine flache, bandförmige, beidseitig beschichtete Kationenaustauschmembran 17 erhalten wird.

Diese wird zugeschnitten und sodann in einen Elektrolyseur bzw. in eine Brennstoffzelle so eingebaut, dass die Seite der beschichteten Kationenaustauschmembran 17, welche die Anodenreaktion katalysiert, in Richtung der Anode ausgerichtet ist, währenddessen die andere Seite zur Kathode ausgerichtet ist (nicht dargestellt). Der so erhaltene Elektrolyseur dient zur PEMbasierten, elektrochemischen Spaltung von Wasser in Sauerstoff und Wasserstoff (PEMWE). Eine entsprechend hergestellte Brennstoffzelle (PEMFC) dient umgekehrt zur Umwandlung von in Wasserstoff und Sauerstoff gespeicherter chemischer Energie in elektrische Energie.

### Beispiele

Im Folgenden wird der Transferprozess für PEM-Anwendungen anhand des Beispiels einer Platin/Kohlenstoff-basierten Katalysatorschicht beschrieben. Damit werden die mit der Erfindung erzielten Effekte experimentell belegt. Als Kationen bzw. Protonen leitendes (anionisches) Polymer wurde Nation^{®} verwendet. Nation^{®} wurde sowohl als Membran (Nation N115) als auch als lonomer (D2021 Nation^{®} solution) verwendet.

### 1. Bereitstellen einer Zusammensetzung

Ein Schraubdeckelglas wurde bis zu einem Drittel mit Yttrium stabilisierte Zirkonoxid Mahlkugeln (Durchmesser 5 mm) gefüllt. Anschließend wurden 9 Gewichtsanteile einer lonomerlösung (D2021 Nation^{®} solution) in das Schraubdeckelglas vorgelegt und mit 82 Gewichtsanteilen 1-Propanol verdünnt. Unter Sauerstoffausschluss wurden schließlich 9 Gewichtsanteile eines Platin auf Kohlenstoff Katalysators Pt/C ~ 1/1 hinzugefügt und mittels Rüttler vordispergiert. Die Tinte wurde im Schraubdeckelglas mittels Rollkippmischer für 72 h dispergiert.

### 2. Beschichtung eines Transfersubstrats mit der Zusammensetzung

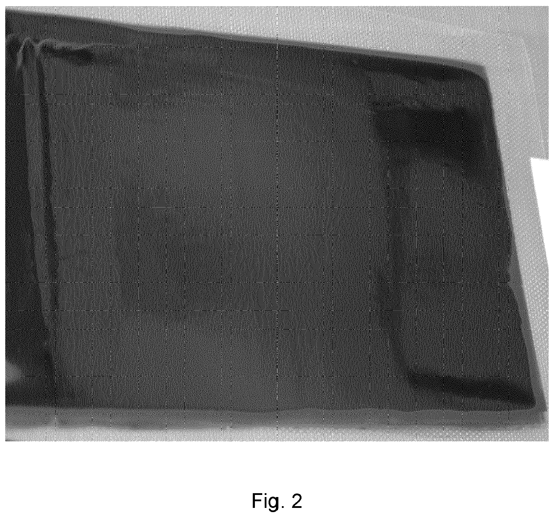

Die unter 1. bereitgestellte Zusammensetzung wurde mittels Kastenrakel auf eine handelsübliche Folie aus einem Fluorethylenpropylen (FEP - S1833-16, Bola) aufgetragen. Figur 2 zeigt ein Foto davon.
- **Figur 2:**: Beschichtung des Transfersubstrats mit der Zusammensetzung

Es wurde ein Kastenrakel mit Rakelspalt von 50 µm gewählt. Die resultierende Schichtdicke nach der Trocknung (bei 20 °C für 16 h) betrug in etwa 7 µm.

### 3. Transferprozess

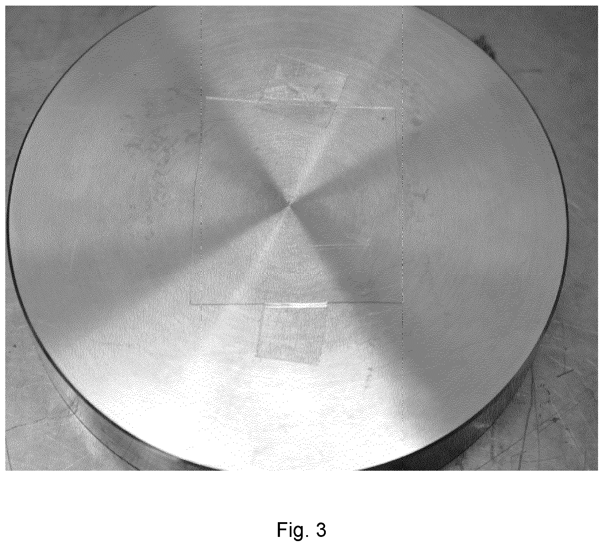

Um selektiv gezielt eine geometrische Form der Protonenaustauschermembran zu beschichten und somit gegebenenfalls Katalysator zu sparen kann diese Form aus dem beschichteten Substrat getrennt werden, um diese anschließend auf die Membran zu übertragen. Im Beispiel wurden Quadrate von 2 cm x 2 cm von dem am Vortag beschichteten Substrat ausgeschnitten um die Katalysatorschicht auf ein größeres, rechteckiges Stück der Membran zu übertragen. Zum einfacheren Handling wurde das Membranstück mittels transparentem Klebeband an den Rändern auf eine Edelstahlscheibe fixiert. Figur 3 zeigt ein Foto davon.
- **Figur 3:**: Membran (transparente Folie) fixiert auf Edelstahlscheibe

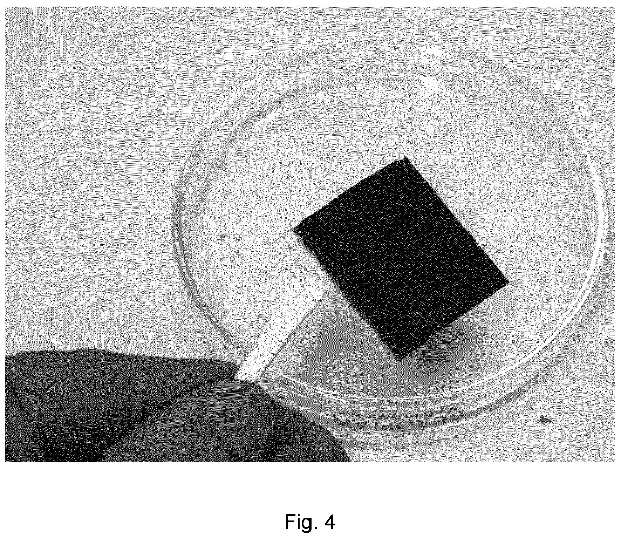

Das zugeschnittenes Stück der beschichteten FEP-Folie wird für ca. 2 Sekunden in ein Gefäß mit Ethylalkohol getaucht, das übrige Quellmittel an der Transferfolie anschließend über eine der Ecken abgetropft. Ein Foto davon ist in Figur 4 abgebildet.
- **Figur 4:**: Benetzung der Katalysatorbeschichtung des beschichteten Transfersubstrat mit Quellmittel (hier: Ethylalkohol)

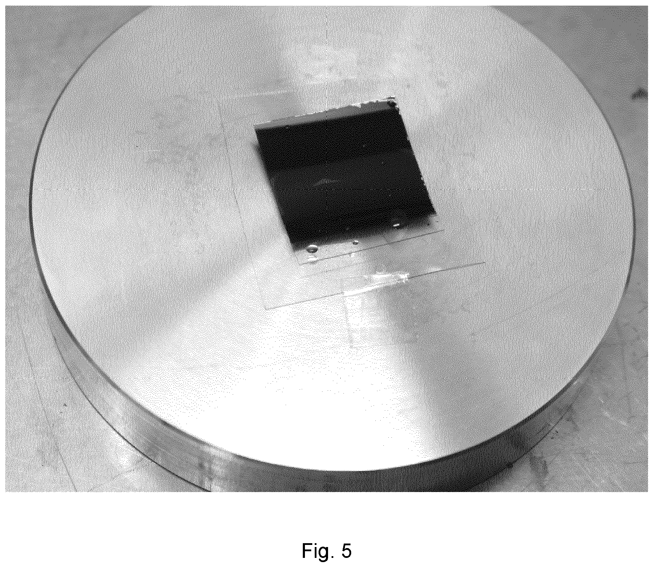

Das in Ethylalkohol getränkte, beschichtete Transfersubstrat wird mit Seite der Katalysatorschicht auf die zugeschnittene Membran gelegt (Foto in Figur 5).
- **Figur 5:**: Membran mit aufgelegtem beschichtetem Transfersubstrat, vor dem Verpressen

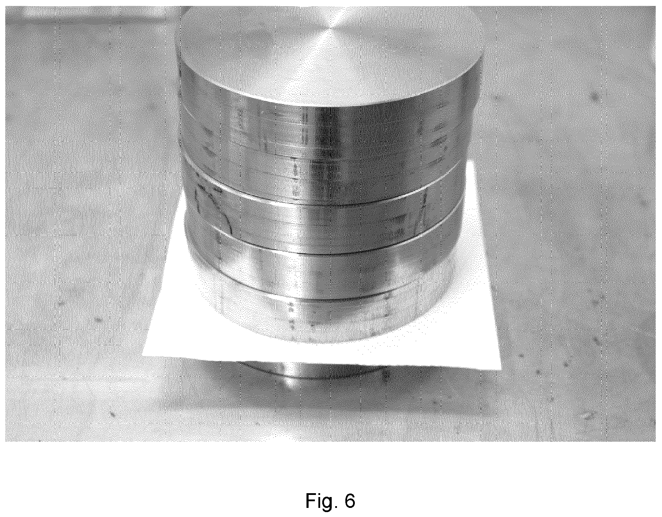

In diesem Beispiel wurde der Anpressdruck von circa 0.07 MPa mittels der Gewichtskraft von planaren Edelstahlscheiben erzielt, welche auf die Membran-Transfersubstrat-Assemblierung aufgestapelt wurden (Foto in Figur 6). Um überschüssiges Quellmittel aufzusaugen, wurde ein saugfähiges Gewebe (genauer gesagt ein Reinraumtuch) eingebracht. Im Beispiel wurde bei 20 °C ein Übertrag innerhalb von 60 Sekunden erzielt.

Durch die Kombination von Quellmittel und Anpressdruck wird die Katalysatorschicht vollständig auf die Membran übertragen.
- **Figur 6:**: Übertragung durch Verpressen

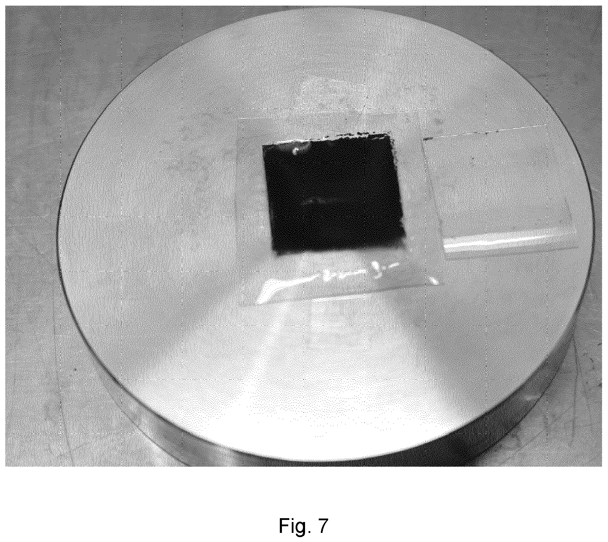

Wie in Figur 7 gezeigt wurde nach der Übertragung der Katalysatorschicht auf die Membran die FEP-Folie abgezogen, wobei die Katalysatorschicht auf der Membran verblieb.
- **Figur 7:**: Links im Bild: Katalysatorbeschichtete Membran nach erfolgreichem Übertrag und Abziehen des Transfersubstrats Rechts im Bild: Transfersubstrat ohne Katalysator, nach dem Abziehen von der katalysatorbeschichteten Membran

### 4. Vergleichsversuch: Übertrag ohne Quellmittel (nicht erfindungsgemäß)

Ohne die Benetzung der Katalysatorschicht mit einem Quellmittel fand selbst unter deutlich höherem Druck in einer Plattenpresse 2 min bei 60 MPa) keine Übertragung der Katalysatorschicht statt.
- **Figur 8:**: Weitgehend erfolgloser Übertrag ohne Quellmittel Links im Bild: Noch fast vollständig mit Katalysator beschichtete Transferfolie. Ohne Quellmittel verbleibt >95% des Katalysators auf der Transferfolie welcher nicht auf die Membran übertragen wurde Rechts im Bild: Membran mit unzureichendem Übertrag der Katalysatorschicht

### 5. Fazit

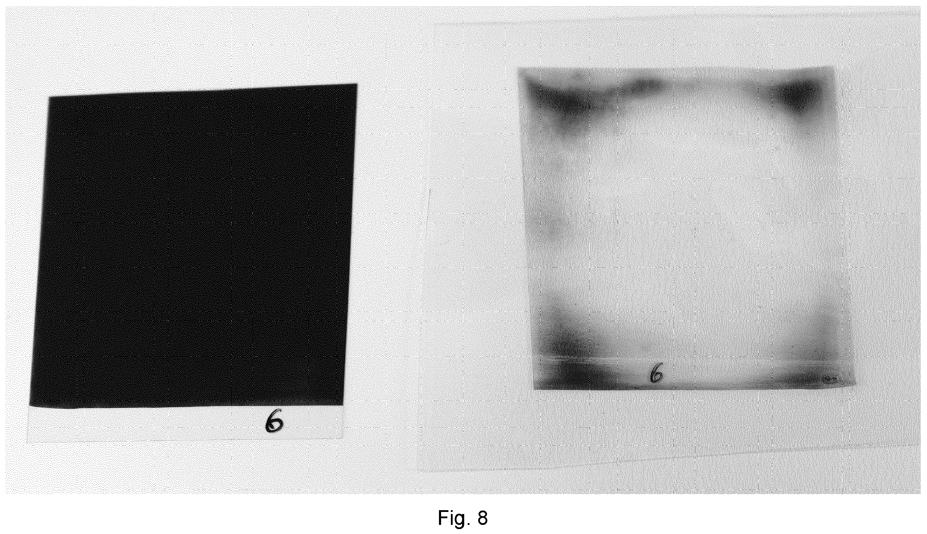

Aus dem Vergleich der Überträge gezeigt in Figuren 7 und 8 ist ersichtlich, dass erfindungsgemäß mit Hilfe von Quellmittel die Effizienz des Übertrags der Katalysatorschicht bei niedrigen Temperaturen wesentlich verbessert werden kann.

### Bezugszeichen

- 1: erste Spule
- 2: Kationenaustauschmembran
- 3: zweite Spule
- 4: erstes Transfersubstrat
- 5: erste Zusammensetzung
- 6: erste Kontaktwalze
- 7: zweites Transfersubstrat
- 8: dritte Spule
- 9: zweite Kontaktwalze
- 10: zweite Zusammensetzung
- 11: Quellmittel
- 12: Walzenpaar
- 13: Walzenpaar
- 14: Sandwich
- 15: erste Schälwalze
- 16: zweite Schälwalze
- 17: beschichtete Kationenaustauschmembran
- 18: vierte Spule
- 19: fünfte Spule
- 20: sechse Spule
- F: Kraft

## Patentansprüche

1. Verfahren zum Beschichten von Kationenaustauschmembranen, umfassend die folgenden, nicht chronologischen Schritte:
a) Bereitstellen einer flachen Kationenaustauschmembran, welche einen Membranwerkstoff enthält oder daraus besteht;
b) Bereitstellen eines ersten flachen Transfersubstrats, welches zumindest einseitig mit einer ersten Zusammensetzung beschichtet ist, wobei die erste Zusammensetzung mindestens ein erstes Polymer und mindestens eine erste katalytisch aktive oder katalytisch aktivierbare Substanz enthält;
c) Bereitstellen eines ersten Quellmittels, welches zumindest teilweise in flüssiger Form vorliegt;
d) Auftragen des ersten Quellmittels auf die erste Zusammensetzung und/oder auf die Kationenaustauschmembran;
e) Verpressen der ersten Zusammensetzung mit der Kationenaustauschmembran in Gegenwart des ersten Transfersubstrats,
f) Abschälen des ersten Transfersubstrats von der ersten Zusammensetzung, sodass eine Kationenaustauschmembran erhalten wird, welche auf einer Seite mit der ersten Zusammensetzung beschichtet ist;
**dadurch gekennzeichnet,**
**dass** die Temperatur der ersten Zusammensetzung beim Verpressen zwischen -90°C und 100°C beträgt,
und **dass** das Verfahren noch den folgenden Schritt umfasst:
g) Quellen des ersten Polymers mit dem ersten Quellmittel.

2. Verfahren nach Anspruch 1, zusätzlich umfassend die folgenden, nicht chronologischen Schritte:
h) Bereitstellen eines zweiten flachen Transfersubstrats, welches zumindest einseitig mit einer zweiten Zusammensetzung beschichtet ist, wobei die zweite Zusammensetzung mindestens ein zweites Polymer und mindestens eine zweite katalytisch aktive oder katalytisch aktivierbare Substanz enthält;
i) Bereitstellen eines zweiten Quellmittels, welches zumindest teilweise in flüssiger Form vorliegt;
j) Auftragen des zweiten Quellmittels auf die zweite Zusammensetzung und/oder auf die Kationenaustauschmembran;
k) Quellen des zweiten Polymers mit dem zweiten Quellmittel;
l) Verpressen der zweiten Zusammensetzung mit der Kationenaustauschmembran in Gegenwart des zweiten Transfersubstrats, wobei die Temperatur der zweiten Zusammensetzung beim Verpressen zwischen -90°C und 100°C beträgt;
m) Abschälen des zweiten Transfersubstrats von der zweiten Zusammensetzung, sodass eine Kationenaustauschmembran erhalten wird, welche auf einer Seite mit der ersten Zusammensetzung beschichtet ist und welche auf der anderen Seite mit der zweiten Zusammensetzung beschichtet ist.

3. Verfahren nach Anspruch 2, **dadurch gekennzeichnet, dass** das Verpressen der ersten Zusammensetzung mit der Kationenaustauschmembran in Gegenwart des zweiten Transfersubstrats und das Verpressen der zweiten Zusammensetzung mit der Kationenaustauschmembran in Gegenwart des ersten Transfersubstrats erfolgt.

4. Verfahren nach einem der Ansprüche 1 bis 3, **dadurch gekennzeichnet, dass** das erste Quellmittel ausschließlich auf die erste Zusammensetzung aufgetragen wird, oder dass das erste Quellmittel ausschließlich auf die Kationenaustauschmembran aufgetragen wird, oder dass das erste Quellmittel sowohl auf die erste Zusammensetzung, als auch auf die Kationenaustauschmembran aufgetragen wird.

5. Verfahren nach einem der Ansprüche 1 bis 4, **dadurch gekennzeichnet, dass** mindestens ein genanntes Transfersubstrat überwiegend aus einem fluorfreien Polymer besteht.

6. Verfahren nach einem der Ansprüche 2 bis 5, **dadurch gekennzeichnet,**
**dass** das erste Quellmittel dem zweiten Quellmittel entspricht.

7. Verfahren nach einem der Ansprüche 2 bis 6, **dadurch gekennzeichnet,**
**dass** das erste Polymer und das zweite Polymer dieselbe Wiederholeinheit aufweisen.

8. Verfahren nach einem der Ansprüche 1 bis 7, **dadurch gekennzeichnet, dass** das erste Polymer und/oder das zweite Polymer Kationen leitend ist.

9. Verfahren nach einem der Ansprüche 1 bis 8, **dadurch gekennzeichnet, dass** es sich bei mindestens einem der folgenden Stoffe um ein sulfoniertes, perflouriertes Polymer handelt:
∘ dem Membranwerkstoff;
∘ dem ersten Polymer;
∘ dem zweiten Polymer.

10. Verfahren nach einem der Ansprüche 1 bis 9, **dadurch gekennzeichnet, dass** es sich bei mindestens einem genannten Quellmittel um eine organisches Substanz handelt, oder dass das Quellmittel ausgewählt ist aus der Gruppe bestehend aus den folgenden Quellmitteln: Methyl-2-pyrrolidon (NMP), N,N-Dimethylformamid (DMF), N,N-Dimethylacetamid (DMAC), Dimethylsulfoxid (DMSO), Isopropanol (IPA), Methanol (MeOH), Ethanol (EtOH).

11. Verfahren nach den Ansprüchen 9 und 10, wobei die Masse des sulfonierten, perflouriertes Polymers *p* beträgt, wobei die Masse des auf das sulfonierte, perflourierte Polymer aufgetragene Quellmittel q beträgt, und wobei für das Verhältnis *q*/*p* Folgendes gilt: 0.01 < *q*/*p* < 2

12. Verfahren nach einem der Ansprüche 1 bis 11, **dadurch gekennzeichnet, dass** das erste Quellmittel das erste Polymer zumindest teilweise löst und/oder dass das zweite Quellmittel das zweite Polymer zumindest teilweise löst.

13. Verfahren nach einem der Ansprüche 1 bis 12, **dadurch gekennzeichnet, dass** mindestens ein genanntes Quellmittel in einem Gemisch vorliegt.

14. Verfahren nach einem der Ansprüche 5 bis 13, **dadurch gekennzeichnet, dass** mindestens ein genanntes Trägersubstrat nach dem Abschälen verworfen oder als Schutzfolie für die beschichtete Kationenaustauschmembran verwendet wird.

15. Verfahren nach einem der Ansprüche 1 bis 14, **gekennzeichnet durch** mindestens eine umlaufende Spule, die im Betrieb des Verfahrens aufgewickelt oder abgewickelt wird, wobei die Spule ausgewählt ist aus der Gruppe umfassend die folgenden Spulen:
i) eine Spule, auf der die Kationenaustauschmembran bandförmig bereitgestellt wird;
ii) eine Spule, auf der die beschichtete Kationenaustauschmembran bandförmig erhalten wird;
iii) eine Spule, auf der ein genanntes Transfersubstrat bandförmig bereitgestellt wird.

16. Verfahren nach Anspruch 15, **dadurch gekennzeichnet, dass** das Verpressen mit Hilfe eines ortsfesten Walzenpaares erfolgt, wobei mindestens eine Walze des Walzenpaares auf einem bereits genannten bandförmigen Transfersubstrat wälzt oder rollt.

17. Verfahren nach Anspruch 16, **dadurch gekennzeichnet, dass** die Walzen des Walzenpaares unbeheizt sind.

18. Verfahren nach einem der Ansprüche 15 bis 17, **dadurch gekennzeichnet, dass** das Abschälen mit Hilfe mindestens einer ortsfesten Schälrolle erfolgt, wobei die Schälrolle auf einem bereits genannten bandförmigen Transfersubstrat rollt oder wälzt.

19. Verfahren nach einem der Ansprüche 1 bis 18, **dadurch gekennzeichnet, dass** mindestens eine genannte katalytisch aktive oder katalytisch aktivierbare Substanz mindestens ein Element enthält, welches aus der Gruppe bestehend aus den folgenden Elementen ausgewählt ist: Iridium (Ir), Nickel (Ni), Cobalt (Co), Chrom (Cr), Eisen (Fe), Ruthenium (Ru), Kuper (Cu), Molybdän (Mo), Zink (Zn), Blei (Pb), Mangan (Mn), Wolfram (W), Platin (Pt), Schwefel (S), Zinn (Sn), Gold (Au), Silber (Ag), Palladium (Pd), Rhenium (Re), Rhodium (Rh) wobei das Element in seiner Reinform oder als Oxid oder als Hydroxid oder als Oxidhydroxid vorliegt.

20. Verfahren nach Anspruch 19, **dadurch gekennzeichnet, dass** es sich bei der katalytisch aktiven oder katalytisch aktivierbaren Substanz um Platin bzw. Platinlegierung geträgert auf Kohlenstoff (Pt/C) oder um einen Iridium-basierten, geträgerten oder ungeträgerten Katalysator, insbesondere um Antimon- dotiertes Zinnoxid (ATO) oder um Niob-dotiertes bzw. Tantal-dotiertes Titan(oxid). handelt.

21. Verfahren nach einem der Ansprüche 1 bis 20, **dadurch gekennzeichnet, dass** die Temperatur der ersten Zusammensetzung und/oder der zweiten Zusammensetzung beim Verpressen zwischen -30°C und 80°C beträgt oder dass die Temperatur der ersten Zusammensetzung und/oder der zweiten Zusammensetzung beim Verpressen zwischen -15°C und 70°C beträgt oder dass die Temperatur der ersten Zusammensetzung und/oder der zweiten Zusammensetzung beim Verpressen zwischen 15°C und 30°C beträgt.

22. Verfahren nach einem der Ansprüche 1 bis 21, **dadurch gekennzeichnet, dass** die Kationenaustauschmembran mit mindestens einer Vorbeschichtung versehen bereit gestellt wird, dergestalt, dass die Zusammensetzung auf die Vorbeschichtung aufgetragen wird

23. Verfahren nach einem der Ansprüche 1 bis 22, **dadurch gekennzeichnet, dass** das Verpressen bei einem Druck von 0.001 MPa bis 0.15 MPa oder dass das Verpressen bei einem Druck von 0.01 MPa bis 0.1 MPa erfolgt.
